(19) Europäisches Patentamt
European Patent Office
Office européen des brevets

(11) Publication number: 0 113 575 A1

(12) EUROPEAN PATENT APPLICATION

(21) Application number: 83307792.8

(22) Date of filing: 21.12.83

(51) Int. Cl.³: C 08 G 59/26
C 09 D 3/58, C 09 D 5/00

(30) Priority: 30.12.82 US 454790

(43) Date of publication of application: 18.07.84 Bulletin 84/29

(84) Designated Contracting States: BE DE FR GB IT NL

(71) Applicant: MOBIL OIL CORPORATION
150 East 42nd Street
New York New York 10017(US)

(72) Inventor: Kaufman, Marvin Leonard
129 Chelsea Way
Bridgewater New Jersey 08807(US)

(74) Representative: West, Alan Harry
Mobil Court 3 Clements Inn
London WC2A 2EB(GB)

# (54) Polyoxazolidone powder coating compositions.

(57) Powder coating compositions comprise epoxy-terminated polyoxazolidone resins prepared by reacting a diepoxide and a diisocyanate in amounts which provide a ratio of epoxide equivalents to isocyanate equivalents from 10:1 to 1.1:1, and curing agents. The polyoxazolidones have an epoxy equivalent weight from 250 to 4000. Such polyoxazolidones can be used alone or in combination with conventional epoxy resins and have comparatively high glass transition temperatures and provide coatings of improved resistance to cathodic disbondment.

EP 0 113 575 A1

POLYOXAZOLIDONE POWDER COATING COMPOSITIONS

This invention relates to thermosetting powder coating compositions which have desirable handling characteristics and which provide substrate coatings having a well balanced combination of practical physical properties.

Powder coating compositions (powder paints) have long been known as pollution-free, energy-saving, resource-saving and labour-saving products. Thermosetting powder coating compositions must have glass transition temperatures high enough to prevent individual particles in such compositions from sintering or fusing during transportation and storage. The resins employed in such powder coating compositions also must have a melt viscosity low enough to permit formation of a smooth continuous film with good adhesion to the substrate being coated. Furthermore, coatings formed from such compositions must have acceptable physical properties such as toughness and impact resistance and must possess high heat and chemical resistance.

Low molecular weight epoxy resins have traditionally been employed in thermosetting powder coating compositions. Such epoxy resins can possess the required glass transition temperature, melt viscosity and coating-forming characteristics for use in products of this type. There is, however, a continuing need to develop additional types of powder coating compositions formulated from particular epoxide-containing resins materials which also have desirably high glass transition temperatures and melt viscosities and which form coatings of improved adhesion to substrates to be coated.

The present invention provides thermosetting polymer powder coating compositions in the form of particles having a size of up to 300 microns, comprising

(A) an epoxy-terminated polyoxazolidone resin which is the reaction product of a diepoxide and a diisocyanate in which the ratio of epoxide equivalents to isocyanate equivalents

provided by the diepoxide and diisocyanate reactants is from 10:1 to 1.1:1, the polyoxazolidone resin having an epoxy equivalent weight from 250 to 4000; and

(B) a curing agent for the epoxy-terminated polyoxazolidone resin.

Although coating compositions comprising epoxy-terminated polyoxazolidone resins have previously been described, for example in U.S. Patents 3,334,110 and 4,066,628, coatings derived from such compositions have been applied only from solution.

Epoxy-terminated polyoxazolidone resins which are utilized in the powder coating compositions of the invention are prepared by reacting a diepoxide with a diisocyanate under such conditions that low molecular weight, epoxy-terminated polyoxazolidone resins are produced. The diepoxide which can be used in such a procedure can be one or more diglycidyl ethers having the general formula

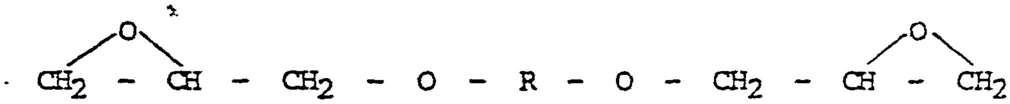

in which R is an aromatic, aliphatic, cycloaliphatic or heterocyclic group. Preferred diepoxides are the diglycidyl ethers of non-fused polynuclear phenols such as those based on 2,2-bis(4-hydroxyphenyl)-propane, i.e. bisphenol A. Examples of such epoxides are those available commercially under the trade names EPON 828, EPON 825 and DER 331. Other suitable diepoxides include the diglycidyl ethers of polyglycols such as DER 736, the diglycidyl ethers of hydrogenated bisphenol A, such as DRH 151, and the heterocyclic, i.e. hydantoin-based, epoxides. These and other suitable epoxides are fully described in U.S. Patent 4,066,628.

Such epoxides are reacted with diisocyanates of the general formula:

$$R' - (NCO)_2$$

in which R' is alkylene, substituted alkylene, arylene or substituted arylene, to form the polyoxazolidone resin components of the compositions of the invention. Examples of suitable diisocyanates include tolylene diisocyanates (TDI) such as 2,4-tolylene diisocyanate, and 2,6-tolylene diisocyanate; the methylene bis(phenyl isocyanates) (MDI) such as 4,4'-methylene bis(phenylisocyanate); and dianisidine diisocyanate, toluidine diisocyanate, m-xylylene diisocyanate, 1,5-naphthylene diisocyanate, p-phenylene diisocyanate, 1,4-diethylbenzene-beta, beta'-diisocyanate, hexamethylene diisocyanate (HMDI), isophorone diisocyanate (IPDI) and 4,4'-methylene bis(cyclohexylisocyanate). Mixtures of any two or more of such isocyanates can also be used, for example mixtures of the 2,4- and 2,6-isomers of tolylene diisocyanate and mixtures of the 2,4'- and 4,4'- isomer of methylene bis(phenyl isocyanate).

Preferred diisocyanates are the tolylene diisocyanates (TDI), the methylene bis(phenyl isocyanates) (MDI) and hexamethylene diisocyanates (HMDI). Other suitable diisocyanates are described more fully in U.S. Patents 4,066,628 and 3,313,747.

These diepoxides and diisocyanates are reacted under conditions which serve to produce an epoxy-terminated, polyoxazolidone of the formula:

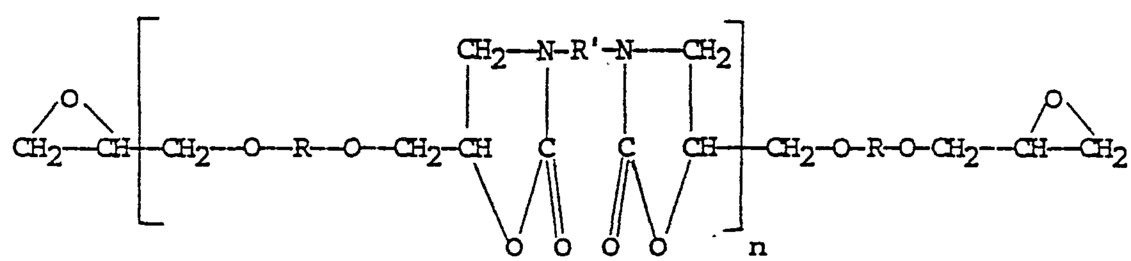

in which R and R' are derived from the diepoxide and diisocyanate, respectively, and have the meanings given above. Production of epoxy-terminated, low molecular weight polyoxazolidones suitable for formulation into the powder coating compositions of the invention is dependent upon utilization of amounts of diepoxide and diisocyanate reactants which provide a ratio of epoxide equivalents to isocyanate equivalents from 10:1 to 1.1:1. More preferably, the ratio of epoxide

equivalents to isocyanate equivalents is from 5:1 to 1.2:1. The molecular weight of the resulting polyoxazolidone will generally be relatively low, providing resins which have an epoxy equivalent weight from 250 to 4000, more preferably from 400 to 1000.

The reaction conditions used to prepare the polyoxazolidone resins from the particular amounts of diepoxides and diisocyanates include the utilization of a condensation-tyoe catalyst. Such catalyst materials are those conventionally employed for reactions of this type and include quaternary ammonium halides, lithium halides, tertiary amines, lithium halide-phosphonium oxide complexes, n-butoxy lithium, dialkyl zinc, organozinc chelate compounds, trialkyl aluminum and dibutyltin dilaurate.

Quaternary ammonium halides, such as tetraethylammonium bromide, and tertiary amines are the preferred catalysts for polyoxazolidone production. The catalyst is advantageously employed in an amount from 0.01% to 1%, more preferably from 0.05% to 0.2%, based on the weight of the diepoxide and diisocyanate.

Reaction conditions for polyoxazolidone production may include the use of a solvent such as a lower alkanol or dimethylformamide (although the use of a solvent is not essential), a reaction temperature from 70°C to 200°C and a reaction period from 0.01 to 6 hours. More preferably, the polyoxazolidones are prepared by reacting the diepoxide and diisocyanate at a temperature from 100°C to 180°C for a period from 1 to 3 hours.

The resulting polyoxazolidone polymers can be formulated along with conventional adjuncts into powder coating compositions. In this respect, the polyoxazolidones have physical and chemical characteristics which render them suitable for formulation into powder compositions. For example, such polyoxazolidone resins exhibit desirably higher glass transition temperatures with acceptably low melt viscosities in comparison with conventional bisphenol A diglycidyl ether epoxy resins. Coatings formed from powder compositions containing such polyoxazolidones also exhibit improved cathodic disbondment resistance in comparison with coatings formed from conventional epoxy resin based powder compositions. The polyoxazolidone resins advantageously comprise from 70% to 99% by weight of such powder coating compositions.

In formulating powder coating compositions according to the invention, the polyoxazolidone resin can be combined with conventional coating composition components such as curing agents, pigments and flow control agents. Such coating compositions can also contain additional resin materials compatible with the polyoxazolidone resins, for example "conventional" mono-, di- and polyepoxide materials described in more detail below.

Curing agents, whether of the coreactive. cross-linking, catalytic or accelerator type, serve to enhance the cure of coatings prepared from the coating compositions of the invention and can include any of the wide variety of materials known to be useful for this purpose in epoxy resin-based coating compositions. Such materials include, for example, polyamines, polyamides, polyaminoamides, polyphenols, polymeric thiols, polycarboxylic acids and anhydrides, polyols, imidazoles, tertiary amines and quaternary ammonium halides. Such curing agents are described in greater detail in U.S. Patents 3,313,747 and 4,066,625. Preferred curing agents of the coreactive or cross-linking types include the polyamines, polyamides, polycarboxylic acids, polyphenols and dicyandiamide. Preferred curing agents of the catalytic/accelerator type include tertiary amines, quaternary ammonium halides and substituted or epoxy-modified imidazoles. Such curing agents can be included in the powder coating compositions of the invention in amounts from 0.1% to 70% by weight of the composition. Curing agents of the coreactive/cross-linking type are preferably used in amounts from 5% to 70% by weight of the composition. Curing agents of the catalytic/accelerator type are preferably used in amounts from 0.5% to 15% by weight of the composition.

Flow control agents can optionally be incorporated into the coating compositions of the invention to aid in levelling the applied and thermoset coating, i.e. to help make the coating as smooth as or smoother than the surface of the substrate to which the coating is applied. Numerous flow control agents are known in the art and are suitable for use in the compositions of the invention, including

silicone resins and oils. An example of a commerically obtainable flow control agent is the substance available under the trade name "Modaflo". Coating compositions of the invention can include from 0.5 to 1.5 weight percent of such levelling agents based on the weight of resin solids.

Another optional component of the coating compositions is a pigment material. One such preferred pigment is titanium dioxide, but any of the well known conventional pigmenting materials can be used, for example phthalocyanine blues and greens; red, yellow, black and brown iron oxides; chrome oxide green; and natural and synthetic silicas, silicates and carbonates. Sufficient pigmentation is used to provide an opaque or coloured coating as needed for the desired appearance. Pigments can be employed in amounts from 1% to 60% by weight of the compositions.

A highly preferred optional ingredient of the powder coating compositions is a conventional epoxy resin of the mono-, di- or polyepoxide type known to be useful in powder coating compositions. Such mono-, di- and polyepoxides, for example, can have the same types of oxazolidone-free organic backbones as described above with respect to the diepoxide reactant used to form the polyoxazolidone resins. Such conventional epoxy resins generally have an epoxy equivalency greater than 1 and an epoxide equivalent weight of from about 190 to 5000. By utilizing a blend of polyoxazolidone resins and such conventional epoxy resins, powder coating compositions having variable and controllable glass transition temperatures can be realized. Powder coating compositions of the present invention preferably comprise from 1% to 80%, and more preferably from 10% to 50% by weight of the total epoxy component, of a mono-, di- or polyepoxide resin material which is not of the polyoxazolidone type, along with from 20% to 99% by weight of the total epoxy component of the epoxy-terminated polyoxazolidone.

The powder coating compositions of the invention may be prepared by any process which uniformly blends the composition components. Dry blend, semi-dry blend or melt blend procedures can be employed to give a uniform blend dispersion. The uniform blend

dispersion can then be pulverized to form the powder coating composition. In a preferred procedure, the polyoxazolidone resin and other ingredients, such as conventional epoxy resin, curing agent, pigments and flow control agents, are dry blended in a mixer and then passed through an extruder and melt mixed. The melt mixed blend is then cooled and pulverized in a suitable milling device to a desired particle size. Particles of the powder coating compositions will generally range in size up to 300 microns, more preferably from 100 to 200 microns.

The powder coating compositions of the invention can be applied to substrates by any desired powder coatings process, although fluidized bed sintering (FBS), electrostatic powder coating (EPC) and electrostatic fluidized bed (EFB) processes are preferred. The coating compositions of the invention are especially well suited for the production of homogenous, firmly adherent coatings on substrates through coating by the fluidized bed or electrostatic spray methods.

In fluidized bed sintering (FBS) a preheated metal part is immersed into the coating powder of the invention, which is kept suspended by a gentle flow of air. The grain size of the powder is generally from 100 to 200 microns. The powder is suspended by blowing air through the porous bottom of a container so that it assumes a fluidized state. The pieces to be coated are preheated to 250° to 400°C and dipped into this fluidized bed. The immersion time of the material being coated depends on the thickness of the coating that is to be produced and amounts to 1 to 12 seconds. In general, the finished coating is prepared in a single procedure in about 3 to 7 seconds.

In the electrostatic powder coating (EPC) process, the coating powder of the invention, which normally has a grain size of under 125 microns, is blown by compressed air into an applicator where it is charged with a voltage of 30 to 100 kV by a high-voltage direct current, and sprayed onto the surface of the material to be coated. Then it is baked on at a specific temperature for a specific length of time in a suitable oven. The powder adheres to the cold work piece due to its charge because it loses its charge slowly on account of its

high electrical resistance of approximately $10^{13}$ to $10^{17}$ ohms centimeter. Alternatively, the electrostatically charged powder can be sprayed onto a heated surface or work piece such as a pipe and allowed to cure with the residual heat of the work piece or with addition of external heat.

In the electrostatic fluidized bed (EFB) process, the two procedures are combined by mounting annular or partially annular electrodes over a fluidized bed containing the powder so as to produce the electrostatic charge of, for example, 50 to 100kV. Plates heated above the sintering temperature of the powder, for example 250° to 400°C, are briefly dipped into the powder cloud without post-sintering, or cold or preheated plates are provided with a powder coating by electrostatic methods and the coating is fused by post-sintering at temperatures specific for the powder.

Numerous substances can be coated by these powder coating methods with powder compositions of the invention, within the limits allowed by the fusing process or the heating time, as the case may be. The preferred substrates are metals, but other materials such as glasses or ceramic articles or other heat resistance materials can be coated.

The following Examples illustrate the invention.

## EXAMPLE I

A flask was charges with 653 g EPON 828 (3.4 eq. epoxide at 192 WPE), 184 g ethanol (4.0 eq. = 230 ml) and 4 drops dibutyltin dilaurate (DBTDC) catalyst. 148 g toluene diisocyanate, TDI (1.7 eq. NCO) was then added slowly and the temperature held below 84°C. Then 4.5 g of triethylene diamine, DABCO (0.4 moles) was added and the temperature raised to 157°C while distilling off ethanol. The last of the ethanol was removed at 170°C under a vacuum. A total of 207 ml (approximately 90% of theoretical) of resulting polyoxazolidone product was obtained; this was discharged, cooled and pulverized. The WPE of the epoxy-terminated polyoxazolidone was 551.6.

EXAMPLE II

A flask was charged with 265 g EPON 825 (1.6 eq. epoxide at 167 WPE), and 0.5 g tetraethylammonium bromide and heated to about 150°C and a vacuum applied to remove moisture from the system. Then 87 g TDI (1.0 eq. NCO) was added and the temperature held at 150-175°C. The temperature was maintained for about 3 hours after the addition was complete, and a vacuum was then applied to de-gas the product. The polyoxazolidone product was then discharged, cooled and pulverized. The WPE of the epoxy-terminated polyoxazolidone resin was 644.

EXAMPLE III

A flask was charged with 328 g EPON 825 (1.96 eq. epoxide at 167 WPE) and 0.25 g tetraethylammonium bromide and heated to about 150°C, and a vacuum applied to remove moisture from the system. Then 87 g TDI (1 equivalent NCO) was added and the temperature held at 150-170°C. At the end of the addition, the WPE of the product was 430 (calculated WPE = 432). Twenty-six g of bisphenol A (0.23 equivalents phenolic OH) was added. After the exotherm subsided, the WPE of the polyoxazolidone product was 629 (calculated = 604). The product was de-gassed under vacuum, discharged and pulverized. The final WPE of the product was 639.

EXAMPLES IV - IX

Powder coatings formulations using the epoxide-terminated polyoxazolidone resins of the type described in Examples II and III were prepared as follows: resins (both oxazolidone alone or as blends with standard epoxides), curing agents, accelerators, pigments and flow control agents were dry blended in a Welex intensive mixer. The blended powders were then passed through an extruder and melt mixed, cooled and pulverized in a condux mill to a suitable particle size (less than 200 microns). Compositions of this type are described in Table I along with similar compositions prepared using a standard epoxy resin.

TABLE I

| Ex. No.[a] | Oxazolidone Type (wt %) | Standard Resin[b] (wt %) | Curing Agent[c] (wt %) | Accelerator[d] (wt %) |
|---|---|---|---|---|
| IV | Ex. II (67.2) | 28.8 | DiCy (3.3) | 2 MI (0.6) |
| V | Ex. II (58.2) | 14.5 | XD8062 (26.7) | 2 MI (0.6) |
| VI | Ex.III (67.6) | 28.9 | DiCy (2.9) | 2 MI (0.6) |
| VII | Ex.III (60.3) | 15.1 | XD8062 (24.1) | 2 MI (0.5) |
| VIII | —— | 96.3 | DiCy (2.7) | 2 MI (1.1) |
| IX | —— | 76.6 | XD8062 (23.0) | 2 MI (0.4) |

a. All samples pigmented - wt % are based on vehicle.

b. DER663u (Dow Epoxy Resin)

c. DiCy (dicyandiamide); XD8062 (Dow phenolic type curing agent).

d. 2 MI (2-methylimidazole).

The powder coatings of Examples IV - IX were tested by Differential Scanning Calorimetry to determine Glass Transition Temperatures (Tg) both initial and final and Delta H of cure. The powders were also sprayed onto test panels (248 - 275°C) and post cured for 5 minutes (232 - 275°C). The test panels were then evaluated for physical properties such as impact resistance, and cathodic disbondment. Direct impact resistance measurements on the coatings were made in accordance with ASTM standard test method D-2794-69. Cathodic disbondment resistance measurement were made by a procedure whereby a hole 3 to 6 mm in diameter is made in the coating to expose the metal. A potential of 1.5 volts vs. SCE is placed on the test panel and the panel is immersed in a 3% NaCl solution at room temperature for 20-30 days. After the test, the panel is removed and the coating surrounding the hole is removed until no more loosely adhering material remains. The radius of the coating removed is a measure of the degree of cathodic disbondment; the smaller the radius, the better the coating.

TABLE II

| Ex. No. | Direct Impact (in/lbs) | Cathodic Disbondment (mm) | Tg Initial (°C) | Tg Final (°C) | Delta H (Cal/g) |
|---|---|---|---|---|---|
| IV | 160+ | 2 | 78 | 124 | 18.7 |
| V | 160+ | 3 | 68 | 113 | 14.1 |
| VI | 160+ | 2 | 70 | 115 | 19.8 |
| VII | 160 | 2 | 73 | 114 | 11.8 |
| VIII | 160+ | 6 | 54 | 100 | 18.8 |
| IX | 160+ | 6 | 52 | 96 | 14.5 |

The data in Table II indicate that powder coatings of the invention exhibit higher Tg's and improved cathodic disbondment resistance in comparison with conventional epoxy resin based coatings.

CLAIMS:

1. A thermosetting polymer powder coating composition in the form of particles having a size of up to 300 microns, comprising

(A) an epoxy-terminated polyoxazolidone resin which is the reaction product of a diepoxide and a diisocyanate in which the ratio of epoxide equivalents to isocyanate equivalents provided by the diepoxide and diisocyanate reactants is from 10:1 to 1.1:1, the polyoxazolidone resin having an epoxy equivalent weight from 250 to 4000; and

(B) a curing agent for the epoxy-terminated polyoxazolidone resin.

2. A composition according to claim 1, wherein component (A) is the reaction product of

(i) a diepoxide selected from diglycidyl ethers of non-fused polynuclear phenols, diglycidyl ethers of polyglycols, diglycidyl ethers of hydrogenated bisphenol A and hydantoin-based epoxides; and

(ii) a diisocyanate selected from alkyl, substituted alkyl, aryl and substituted aryl diisocyanates,

and wherein component (B) is selected from the group consisting of polyamines, polyamides, aminoamides, polyphenols, polymeric thiols, polycarboxylic acids and anhydrides, polyols, imidazoles, dicyandiamide, tertiary amines and quaternary ammonium halides.

3. A composition according to claim 1 or claim 2, wherein in component (A), the ratio of epoxide equivalents to isocyanate equivalents is from 5:1 to 1.2:1.

4. A composition according to any one of claims 1 to 3, wherein component (A) has an epoxy equivalent weight from 400 to 1000.

5. A composition according to any one of claims 1 to 4, which also comprises (C) an oxazolidone-free, mono-, di- or polyepoxide resin comprising an aromatic, aliphatic, cycloaliphatic or heterocyclic glycidyl ether.

6. A composition according to claim 5, wherein component (C) is a diglycidyl ether of bisphenol A having an epoxy equivalent weight from 190 to 5000.

7. A composition according to claim 5 or claim 6, comprising from 70 to 99% of component (A), from 0.1 to 70% of component (B) and from 1 to 80% of component (C), based on the weight of components (A) and (C).

8. A composition according to any one of claims 1 to 7, which also comprises a pigment and/or a flow control agent.

9. A substrate bearing a coating of a cured composition according to any one of claims 1 to 8.

European Patent Office

# EUROPEAN SEARCH REPORT

0113575

Application number

EP 83 30 7792

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | CHEMICAL ABSTRACTS, vol. 84, no. 22, 31st May 1976, page 44, no. 151556w, Columbus Ohio (USA); & JP - A - 75 158 650 (HITACHI LTD.)(22-12-1975) *Abstract* | 1-9 | C 08 G 59/26<br>C 09 D 3/58<br>C 09 D 5/00 |
| | --- | | |
| Y | GB-A-1 176 254 (HENKEL) *Claims; page 2, lines 88-92* | 1-9 | |
| | --- | | |
| A | US-A-3 334 110 (C.H.SCHRAMM) *Claims* | 1 | |
| | ----- | | |
| | | | TECHNICAL FIELDS SEARCHED (Int. Cl. 3) |
| | | | C 08 G<br>C 09 D |

The present search report has been drawn up for all claims

| Place of search | Date of completion of the search | Examiner |
|---|---|---|
| THE HAGUE | 22-03-1984 | DERAEDT G. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03 82